# DEMANDE DE BREVET EUROPEEN

(11) **EP 1 715 236 A1**
(43) Date de publication de la demande: **25.10.2006**
(21) Numéro de dépôt: 06290440.4
(22) Date de dépôt: 17.03.2006
(51) Int. Cl.: F16L 37/24

(54) **Dispositif pour l'accouplement démontable de deux conduites qui comporte des moyens automatiques de verrouillage à baionnette**

(30) Priorité: 19.04.2005 FR 0503907
(71) Demandeur: VALEO VISION, 93012 Bobigny Cédex (FR)
(72) Inventeur: Widiez, Stéphane, 92600 Asnieres sur Seine (FR)

(57) **Abrégé**

L'invention concerne un dispositif (24) pour l'accouplement démontable de deux conduites qui comporte un premier embout mâle (26) d'accouplement et un deuxième embout femelle (28), du type dans lequel l'embout mâle (26) est mobile par rapport à l'embout femelle (28) entre une première position arrière démontée et une deuxième position avant accouplée, et du type qui comporte des moyens (70, 90) pour le verrouillage à baïonnette de l'embout mâle (26) en position accouplée avec l'embout femelle (28) qui comportent des premiers moyens (70) de blocage axial qui sont portés par l'embout mâle (26) qui sont destinés à coopérer avec des deuxièmes moyens (90) de blocage axial qui sont portés par l'embout femelle (28). Conformément à l'invention, le dispositif caractérisé comporte des moyens de guidage en rotation (56, 68, 92) munis de moyens élastiques de rappel (34), qui provoquent la rotation automatique des premiers moyens de verrouillage (70) dans le sens positif pour provoquer le verrouillage à baïonnette lorsque l'embout mâle (26) est emmanché axialement dans l'embout femelle (28) depuis sa position arrière démontée jusqu'à sa position avant accouplée.

## Description

L'invention concerne un dispositif pour l'accouplement démontable des extrémités libres de deux conduites de fluide, qui comporte deux embouts coaxiaux.

L'invention concerne plus particulièrement un dispositif pour l'accouplement démontable des extrémités libres de deux conduites, notamment de fluide, qui comporte deux embouts coaxiaux parmi lesquels :
- un premier embout mâle d'accouplement qui est apte à être adapté à l'extrémité libre de la première conduite ;
- et un deuxième embout femelle qui est apte à être adapté à l'extrémité libre de la deuxième conduite ;
du type dans lequel l'embout mâle est mobile par rapport à l'embout femelle entre une première position arrière démontée et une deuxième position avant accouplée dans laquelle l'embout mâle est emmanché axialement vers l'avant à l'intérieur de l'embout femelle, et du type qui comporte des moyens pour le verrouillage à baïonnette de l'embout mâle en position accouplée avec l'embout femelle qui comportent des premiers moyens de blocage axial qui sont portés par l'embout mâle qui sont destinés à coopérer avec des deuxièmes moyens de blocage axial qui sont portés par l'embout femelle, le verrouillage a baïonnette étant obtenu par rotation des premiers moyens dans un sens positif par rapport aux deuxièmes moyens entre une position angulaire d'engagement et une position angulaire de verrouillage.

On connaît déjà des dispositifs d'accouplement de ce type. Ainsi le document US-A-2002/0.163.180 décrit et représente un dispositif pour le raccordement de deux conduites qui comporte un embout mâle et un embout femelle qui sont coaxiaux. L'embout femelle comporte une bague folle en rotation autour de l'axe de l'embout femelle. La bague porte deux ergots qui s'étendent radialement vers l'intérieur de la bague. Les ergots sont destinés à coopérer avec deux crans complémentaires qui sont portés par la face cylindrique externe du corps de l'embout mâle afin de produire un verrouillage axial du type à baïonnette.

Lors de l'accouplement des deux embouts, un opérateur emmanche axialement l'embout mâle dans l'embout femelle, puis il tourne la bague de l'embout femelle autour de son axe de manière à loger les ergots dans les crans associés.

Pour réaliser l'accouplement des embouts, un opérateur doit ainsi effectuer successivement un premier mouvement d'emmanchement axial pour raccorder les conduites, puis un deuxième mouvement de rotation de la bague pour verrouiller l'accouplement.

De même, pour le désaccouplement des embouts, l'opérateur fait d'abord tourner la bague pour déverrouiller l'accouplement en dégageant les ergots de leurs crans, puis il écarte axialement les embouts l'un de l'autre pour les désaccoupler.

Ainsi, aussi bien l'accouplement que le désaccouplement des embouts nécessitent la réalisation d'un opération d'accouplement ou de désaccouplement axiale, et une opération de verrouillage ou de déverrouillage par rotation de la bague.

Lorsque les embouts sont agencés dans des endroits étroits difficilement accessibles à un opérateur, le fait de devoir effectuer ces deux opérations peut devenir fastidieux.

Afin de résoudre ce problème, l'invention propose un dispositif pour l'accouplement de deux conduites du type décrit précédemment, dans lequel sont prévus des moyens de guidage en rotation munis de moyens élastiques de rappel, qui provoquent la rotation automatique des premiers moyens de verrouillage dans le sens positif pour provoquer le verrouillage à baïonnette lorsque l'embout mâle est emmanché axialement dans l'embout femelle depuis sa position arrière démontée jusqu'à sa position avant accouplée.

Selon d'autres caractéristiques de l'invention :
- les deuxièmes moyens de verrouillage comportent au moins un cran qui est porté par l'embout femelle, et en ce que les premiers moyens de verrouillage comportent au moins un ergot qui est monté mobile en rotation par rapport au corps de l'embout mâle autour de son axe entre la première position angulaire d'engagement dans laquelle l'ergot est aligné axialement avec une rainure d'insertion portée par l'embout femelle et la deuxième position angulaire de verrouillage dans laquelle l'ergot est logé dans le cran de l'embout femelle lorsque l'embout mâle est en position avant accouplée ;
- le dispositif comporte une première rampe de guidage en rotation de l'ergot depuis sa position angulaire d'engagement jusqu'à une position angulaire intermédiaire de verrouillage, et en ce qu'il comporte une deuxième rampe de verrouillage qui guide l'ergot en rotation depuis sa position angulaire intermédiaire de verrouillage jusqu'à sa position angulaire de verrouillage ;
- la deuxième rampe de verrouillage est portée par l'embout femelle et comporte un plan radial orienté vers l'avant qui est incliné d'avant en arrière depuis une première extrémité avant qui est adjacente à une extrémité avant de la rainure d'insertion jusqu'à une deuxième extrémité arrière qui est adjacente au cran, et le dispositif comporte des moyens élastiques de rappel qui poussent l'ergot de verrouillage axialement vers l'arrière contre la deuxième rampe de verrouillage lorsque l'embout mâle est dans sa position accouplée et lorsque l'ergot est dans sa position angulaire intermédiaire, de manière à provoquer la rotation de l'ergot jusqu'à sa position angulaire de verrouillage dans laquelle il est logé dans le cran ;
- l'ergot est monté coulissant axialement par rapport au corps de l'embout mâle, et en ce que la première rampe de guidage est portée par le corps de l'embout mâle de manière qu'elle soit agencée dans le prolongement vers l'avant de la deuxième rampe de verrouillage lorsque l'embout mâle est dans une position avant transitoire, et de manière que l'ergot soit poussé par les moyens élastiques de rappel vers l'arrière contre la première rampe de guidage pour provoquer la rotation de l'ergot jusqu'à sa position angulaire intermédiaire ;
- le dispositif comporte des moyens de déverrouillage qui guident automatiquement l'ergot de verrouillage en rotation dans le sens positif hors du cran de verrouillage depuis sa position angulaire de verrouillage jusqu'à une position angulaire de libération dans laquelle l'ergot est aligné avec une rainure axiale de libération qui est portée par l'embout femelle, lorsque l'embout mâle est poussé axialement vers l'avant depuis sa position avant accouplée jusqu'à sa position extrême avant transitoire dans laquelle l'ergot est à l'avant du cran ;
- les moyens de déverrouillage comportent :
   - une deuxième rampe de guidage qui guide l'ergot en rotation entre sa position angulaire de verrouillage et une position angulaire intermédiaire de déverrouillage lorsque le corps de l'embout mâle est poussé axialement vers l'avant depuis sa position accouplée jusqu'à sa position avant transitoire ;
   - une rampe de libération qui est portée par l'embout femelle et qui comporte un plan radial orienté vers l'avant qui est incliné d'avant vers l'arrière depuis une première extrémité avant qui est adjacente au cran jusqu'à une deuxième extrémité arrière qui est adjacente à la rainure de libération de manière à guider l'ergot en rotation depuis sa position angulaire intermédiaire de déverrouillage jusqu'à sa position angulaire de libération, et en ce qu'il comporte des moyens élastiques de rappel qui poussent l'ergot de verrouillage axialement vers l'arrière contre la rampe de guidage de manière à le faire glisser jusqu'à sa position angulaire de libération ;
- l'ergot est monté coulissant axialement par rapport à l'embout mâle, et en ce que la deuxième rampe de guidage qui est portée par l'embout mâle, est agencée dans le prolongement vers l'avant de la rampe de libération lorsque l'embout mâle est dans sa position avant transitoire ;
- le dispositif comporte des moyens d'indexation angulaire du corps de l'embout mâle par rapport l'embout femelle ;
- l'un des deux embouts comporte au moins un doigt radial d'indexation qui est destiné à coopérer avec une rainure axiale d'indexation de l'autre embout ;
- dans la position accouplée de l'embout mâle, les moyens élastiques de rappel exercent une force axiale sur l'ergot afin de le maintenir dans le cran de verrouillage.

D'autres caractéristiques et avantages apparaîtront au cours de la lecture de la description détaillée qui va suivre pour la compréhension de laquelle on se reportera aux dessins en annexe parmi lesquels :
- la figure 1 est une vue en perspective éclatée qui représente un embout mâle et un embout femelle d'un dispositif d'accouplement réalisé selon l'invention ;
- la figure 2 est une vue en perspective avec arrachement qui représente les embouts de la figure 1 dans une position intermédiaire entre une position démontée et une position accouplée ;
- la figure 3 est une vue en coupe axiale qui représente l'embout mâle de la figure 1 ;
- la figure 4 est une vue de profil en coupe axiale qui représente une première étape d'accouplement dans laquelle l'embout mâle est dans une position d'emmanchement dans l'embout femelle ;
- la figure 5 est une vue en perspective à plus grande échelle qui représente un détail de l'embout femelle ;
- la figure 6 est une vue de profil avec arrachement qui représente une deuxième étape d'accouplement de l'embout mâle avec l'embout femelle ;
- la figure 7 est une vue similaire à celle de la figure 6 qui représente une troisième étape d'accouplement ;
- la figure 8 est une vue similaire à celle de la figure 6 qui représente une quatrième étape d'accouplement ;
- la figure 9 est une vue similaire à celle de la figure 4 qui représente une cinquième étape d'accouplement ;
- la figure 10 est une vue similaire à celle de la figure 6 qui représente une sixième étape d'accouplement ;
- la figure 11 est une vue similaire à celle de la figure 6 qui représente une septième étape d'accouplement ;
- la figure 12 est une vue similaire à celle de la figure 4 qui représente l'embout mâle en position accouplée avec l'embout femelle ;
- la figure 13 est une vue similaire à celle de la figure 4 qui représente une première étape de désaccouplement ;
- la figure 14 est une vue similaire à celle de la figure 4 qui représente une deuxième étape de désaccouplement.

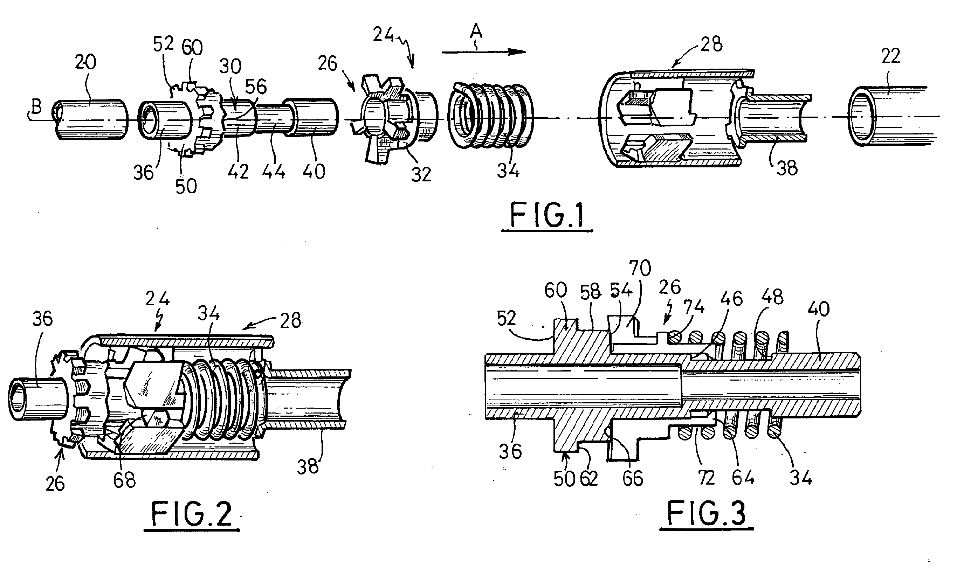

Dans la suite de la description, on adoptera à titre non limitatif une orientation axiale dirigée d'arrière en avant et indiquée par la flèche "A" de la figure 1. On définit aussi à titre non limitatif un sens de rotation positif autour de l'axe "A" qui est indiqué par la flèche "R" de la figure 5 et qui correspond au sens horaire en regardant dans la direction axiale "A" vers l'avant.

Dans la suite de la description, des éléments similaires, analogues ou identiques seront désignés par des mêmes numéros de référence.

On a représenté à la figure 1 une extrémité libre 20 d'une première conduite qui est située à gauche de la figure 1, et une extrémité libre 22 d'une deuxième conduite qui est située à droite de la figure 1.

L'une des conduites est ici raccordée à un réservoir (non représenté) de liquide de nettoyage embarqué à bord d'un véhicule automobile tandis que l'autre conduite est raccordée à un gicleur de nettoyage d'une glace de projecteur du véhicule automobile (non représentée).

Les embouchures des deux extrémités libres 20, 22 sont destinées à être accouplées l'une à l'autre par l'intermédiaire d'un dispositif d'accouplement 24 pour permettre l'alimentation du gicleur en liquide de nettoyage.

A cet effet, les embouchures des deux extrémités libres sont agencées en vis-à-vis l'une de l'autre de manière qu'elles soient accouplées l'une à l'autre le long de l'axe "B" comme représenté à la figure 2.

Le dispositif 24 pour le raccordement des deux extrémités 20, 22 comporte un premier embout mâle 26, qui est représenté à gauche aux figures, et un deuxième embout femelle 28 qui est représenté à droite aux figures.

Comme représenté à la figure 1, l'embout mâle 26 comporte un corps 30 de forme globalement tubulaire coaxial à l'axe "B" qui est ouvert à ses deux extrémités. L'embout mâle 26 comporte aussi une bague 32 coaxiale à l'axe "B" et un ressort hélicoïdal cylindrique 34 coaxial à l'axe "B".

L'embout femelle 28 comporte ici une pièce unique de forme tubulaire coaxiale à l'axe "B".

Chaque embout 26, 28 est apte à être adapté à l'extrémité libre 20, 22 de la conduite associée.

Ainsi, le corps 30 de l'embout mâle 26 comporte un tronçon d'extrémité arrière 36 cylindrique de raccord qui est destiné à être inséré à force dans l'embouchure de l'extrémité libre 20 de la première conduite.

De manière similaire, l'embout femelle 28 comporte un tronçon d'extrémité avant 38 cylindrique de raccord qui est destiné à être inséré à force dans l'embouchure de l'extrémité libre 22 de la deuxième conduite.

Avantageusement, le tronçon d'extrémité de raccord 36, 38 de chaque embout 26, 28 est fixé de manière étanche à la conduite associée à l'aide d'un collier (non représenté) qui serre l'extrémité libre 20, 22 autour du tronçon d'extrémité de raccord 36, 38.

On décrit à présent l'embout mâle 26 en référence aux figures 1 et 3.

Le corps tubulaire 30 de l'embout mâle 26 comporte un tronçon d'extrémité avant cylindrique qui forme une portée 40 qui est destinée à être emmanchée axialement d'arrière vers l'avant de manière étanche dans le tronçon avant de raccord 38 de l'embout femelle 28 dans une position accouplée de l'embout mâle 26 avec l'embout femelle 28 dans laquelle les deux conduites 20, 22 sont raccordées de manière étanche.

Le corps 30 comporte aussi un tronçon central 42 qui est destinée à recevoir à rotation la bague 32. Le diamètre du tronçon central 42 est ici sensiblement le même que celui du tronçon d'extrémité arrière de raccord 36 de l'embout mâle 26.

Un tronçon intermédiaire 44 est interposé entre le tronçon central 42 et la portée avant 40. Le tronçon intermédiaire 44 a un diamètre inférieur aux diamètres du tronçon central 42 et de la portée avant 40. Ainsi, ce tronçon intermédiaire 44 est délimité axialement par deux épaulements radiaux arrière 46 et avant 48.

Le corps 30 comporte enfin un collet 50 qui est interposé entre le tronçon d'extrémité arrière de raccord 36 et le tronçon central 42.

La face radiale arrière 52 du collet 50 est destinée à former une butée pour le bord annulaire de l'embouchure de l'extrémité libre 20 lors de l'insertion du tronçon d'extrémité arrière de raccord 36 à l'intérieur de l'extrémité libre 20.

La face radiale annulaire avant 54 du collet 50 présente une surface en couronne dentelée formée d'une succession de pentes "montantes" 55 et de pentes "descendantes" 56 qui sont orientées tangentiellement au corps 30. Par pente "montante", on entend une pente qui est inclinée d'arrière en avant selon le sens de rotation positif "R", et par pente "descendante", on entend une pente qui est inclinée d'avant en arrière toujours selon le sens positif de rotation "R".

Comme on le verra par la suite, les pentes "descendantes" 56 du collet 50 sont destinées à former des rampes de guidage en rotation de la bague 32 pour le verrouillage de l'accouplement de l'embout mâle 26 avec l'embout femelle 28.

La face cylindrique périphérique 58 du collet 50 comporte des doigts 60 qui s'étendent radialement vers l'extérieur. Les doigts 60 sont ici au nombre de dix et ils sont répartis régulièrement autour de la face périphérique 58.

Ces doigts 60 sont destinés à coopérer avec des plans complémentaires d'indexation de l'embout femelle 28 qui seront décrits par la suite, afin d'indexer la position angulaire du corps 30 autour de l'axe "B" par rapport à l'embout femelle 28. A cet effet, la face radiale avant 62 des doigts 60 est profilée en forme de "V" dont la pointe est orientée vers l'avant.

Comme représentée à la figure 3, la bague 32 est montée folle en rotation sur le tronçon central 42 du corps 30 autour de l'axe "B", et elle est aussi montée coulissante par rapport au corps 30 selon la direction axiale "A".

Le bord d'extrémité avant de la bague 32 comporte une collerette 64 qui s'étend radialement vers l'intérieur, c'est-à-dire en direction de l'axe "B". La collerette 64 est reçu autour du tronçon intermédiaire 44 et axialement entre les épaulements 46, 48.

Par ailleurs, la face radiale annulaire arrière 66 de la bague 32 présente une surface en couronne dentelée complémentaire de celle de la face avant 54 du collet 50 du corps 30 de sorte que la face arrière dentelée 66 de la bague 32 puisse être imbriquée axialement dans la face avant dentelée 54 du collet 50.

Ainsi, la face arrière 66 de la bague 32 comporte une succession de pentes "montantes" 67 et de pentes "descendantes" 68, comme illustré à la figure 2.

Le coulissement axial de la bague 32 par rapport au corps 30 est limité vers l'avant par le contact de la collerette 64 avec l'épaulement avant 48, et, comme illustré à la figure 3, vers l'arrière par le contact entre la face arrière 66 de la bague 32 et la face avant 54 du collet 50.

La bague 32 comporte aussi des ergots 70 qui s'étendent radialement vers l'extérieur depuis le pourtour de la bague 32. Les ergots 70 sont ici au nombre de cinq et ils sont répartis régulièrement sur le pourtour de la bague 32.

La face radiale avant des ergots 70 est conformée en "V" dont la pointe est orientée vers l'avant.

De plus, la distance radiale entre l'axe "B" et l'extrémité libre des ergots 70 est supérieure à la distance radiale entre l'axe "B" et l'extrémité libre des doigts d'indexation 60 du collet 50.

Ces ergots 70 forment des premiers moyens de blocage axial qui ont une fonction de verrouillage de l'embout mâle 26 dans sa position accouplée avec l'embout femelle 28.

Un tronçon d'extrémité avant 72 de la bague 32 est destiné à être introduit coaxialement dans un tronçon d'extrémité arrière du ressort cylindrique 34. La bague 32 comporte aussi un épaulement radial central d'appui 74 orienté vers l'avant sur lequel l'extrémité arrière du ressort 34 est destiné à être en appui comme représenté à la figure 3.

Le ressort 34 s'étend ainsi radialement autour du corps 30 de l'embout mâle 26.

Avantageusement, le ressort 34 est fixé à la bague 32 de manière à ce qu'il ne soit pas accidentellement séparé de l'embout mâle 26.

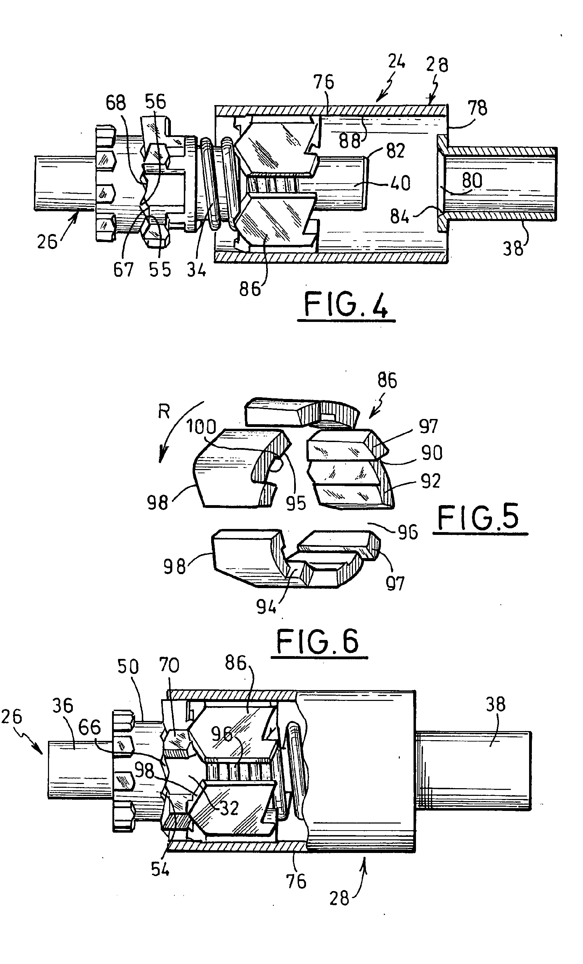

En se reportant aux figures 4 et 5, on décrit maintenant l'embout femelle 28.

L'embout femelle 28 comporte un tronçon d'extrémité arrière 76 cylindrique tubulaire qui prolonge coaxialement vers l'arrière son tronçon d'extrémité avant de raccord 38. Le diamètre du tronçon d'extrémité arrière 76 est sensiblement plus grand que le diamètre du tronçon d'extrémité avant 38.

Le fond radial d'extrémité avant 78 du tronçon arrière 76 comporte un orifice coaxial 80 qui débouche dans l'extrémité avant de raccord 38.

Le diamètre intérieur du tronçon d'extrémité arrière 76 est suffisamment grand pour loger l'embout mâle 26.

Le diamètre intérieur de l'extrémité avant de raccord 38 est adapté pour recevoir la portée avant 40 de l'embout mâle 26 de manière à raccorder de manière étanche les deux extrémités libres 20, 22 des conduites.

Avantageusement, la portée avant 40 de l'embout mâle comporte un joint torique (non représenté) qui est destiné à être intercalé entre la face cylindrique extérieure de la portée avant 40 et la face cylindrique intérieure du tronçon avant de raccord 38 de l'embout femelle 26 pour assurer l'étanchéité du raccord.

Pour faciliter l'emmanchement axial de la portée avant 40 de l'embout mâle 26 dans le tronçon avant de raccord 38 de l'embout femelle 28, le contour du bord d'extrémité de la portée avant 40 comporte un chanfrein 82 et le fond 78 du tronçon arrière 76 de l'embout femelle 28 comporte une zone périphérique 84 de l'orifice coaxial 80 en forme d'entonnoir pour guider la portée avant 40 jusqu'à l'orifice coaxial 80.

Le tronçon arrière 76 de l'embout femelle 28 comporte aussi un manchon 86 qui s'étend radialement vers l'intérieur depuis la face cylindrique intérieure 88 du tronçon arrière 76. Le manchon 86 est ici formé venu de matière avec le tronçon arrière 76.

Le manchon 86 est représenté plus en détail à la figure 5.

La face cylindrique intérieure 95 du manchon 86 a un diamètre intérieur suffisant pour permettre le passage du collet 50, mais ce diamètre intérieur n'est pas suffisant pour permettre le passage des doigts d'indexation 60 du collet 50.

La face radiale annulaire avant du manchon 86 comporte des crans 90 qui sont ici au nombre de cinq.

En tournant autour de l'axe "B" dans le sens positif "R", qui correspond à un sens antihoraire en se reportant à la figure 5, chaque cran 90 est délimité en amont par une rampe de verrouillage 92 "descendante" d'avant vers l'arrière et en aval par une face de blocage 94 orientée axialement perpendiculairement à une direction tangente. Le fond du cran 90 est ainsi formé par l'intersection de l'extrémité arrière de la pente de verrouillage 92 et de la face de blocage 94.

Chaque cran 90 forme des deuxièmes moyens de blocage axial qui est destiné à recevoir un ergot 70 de la bague 32 de l'embout mâle 26 lorsque l'ergot 70 est dans une position angulaire de verrouillage, de manière à verrouiller axialement l'embout mâle 26 dans sa position accouplée par rapport à l'embout femelle 28.

La face cylindrique interne 95 du manchon comporte des rainures axiales 96 qui sont interposées entre les crans 90. Le manchon 86 comporte ici cinq rainures axiales 96. Les extrémités avant et arrière de chaque rainure 96 sont débouchantes dans les faces radiales annulaires avant et arrière du manchon 86.

Les rainures axiales 96 sont réparties autour du manchon 86 en alternance avec les crans 90, c'est-à-dire que les rainures 96 ne sont pas alignées axialement avec les crans 90.

Chaque rainure axiale 96 est agencée de manière que qu'une première extrémité avant de la rampe de verrouillage 92 associée soit adjacente à l'extrémité avant de la rainure d'insertion 96.

Les rainures axiales 96 sont suffisamment profondes pour recevoir les ergots 70 en coulissement axial le long du manchon 86 jusqu'aux crans 90 pour permettre un verrouillage du type à baïonnette de l'embout mâle 26 en position accouplée avec l'embout femelle 28.

Les rainures axiales 96 forment ainsi des rainures d'insertion qui sont destinées à permettre l'insertion des ergots 70 jusqu'aux crans 90. Mais ces rainures axiales 96 sont aussi des rainures de libération qui permettent de retirer les ergots 70 lors du désaccouplement de l'embout mâle 26.

La face radiale annulaire avant du manchon 86 comporte aussi des rampes de libération 97 dont chacune est associée à un cran 90. Plus particulièrement, en tournant selon le sens positif "R" autour de la face radiale avant du manchon 86, chaque rampe de libération 97 est agencée en aval du cran 90 associé et elle présente un plan incliné d'avant en arrière similaire à celui des rampes de verrouillage 92. L'extrémité amont arrière de la rampe de libération 97 est adjacente à la face de blocage 94, tandis que son extrémité aval arrière débouche à l'extrémité avant d'une rainure d'insertion 96.

Par ailleurs, la face radiale annulaire arrière du manchon 86 est crénelée de manière à comporter une succession de plans inclinés 98 "montants" et "descendants". L'extrémité arrière débouchante de chaque rainure 96 est ainsi flanquée de deux plans inclinés 98 qui convergent en entonnoir vers la rainure 96.

Ainsi, entre deux rainures 96 successives, la face radiale arrière du manchon 86 comporte deux plans inclinés 98 qui forment un "V" dont la pointe est dirigée vers l'arrière, chaque pointe étant ici globalement alignée axialement avec un cran 90.

Ces plans inclinés 98 sont destinés à coopérer avec les doigts d'indexation 60 et avec les ergots 70 pour indexer la position angulaire du corps 30 et de la bague 32 par rapport à l'embout femelle 28. Par la suite, ils seront donc qualifiés de plans d'indexation 98.

La face cylindrique intérieure 95 du manchon 86 comporte enfin des cannelures axiales 100. Les cannelures 100 sont au nombre de cinq et elles sont agencées à intervalle régulier dans la face cylindrique intérieure 95 en alternance avec les rainures 96. Les deux extrémités avant et arrière de chaque cannelure 100 sont débouchantes dans les faces radiales avant et arrière du manchon 86. Plus particulièrement, l'extrémité arrière de chaque cannelure 100 débouche au niveau de la pointe formée par deux plans d'indexation 98 adjacents.

Les cannelures 100 sont suffisamment profondes pour recevoir les doigts d'indexation 60 de l'embout mâle 26 en coulissement axial, mais elles ne sont pas suffisamment profondes pour recevoir les ergots 70 en coulissement axial

Ainsi, les cinq cannelures 100 en association avec les cinq rainures 96 sont aptes à recevoir simultanément en coulissement axial les dix doigts d'indexation 60 de l'embout mâle 26.

On se reporte à présent aux figures 6 à 12 pour décrire le fonctionnement du dispositif 24 lors de l'opération d'accouplement des extrémités libres 20, 22 des deux conduites.

Dans la suite de la description et à titre non limitatif, l'embout femelle 28 sera choisi comme une référence fixe pour les mouvements en translation axial et en rotation de l'embout mâle 26.

On a représenté à la figure 6 l'embout mâle 26 dans une position arrière démontée par rapport à l'embout femelle 28 dans laquelle la portée avant 40 de l'embout mâle 26 a été insérée axialement dans le manchon 86 du tronçon arrière 76 de l'embout femelle 28, selon un mouvement axial d'accouplement qui est dirigé d'arrière en avant. Cependant, la portée 40 n'est pas encore emmanchée dans le tronçon de raccord avant 38 de l'élément femelle 28.

La face dentelée arrière 66 de la bague 32 est en butée contre la face dentelée avant 54 du collet 50 du corps 30.

Comme illustré à la figure 6, les ergots 70 de la bague 32 ne sont pas ici alignés axialement avec les rainures d'insertion 96. Lors du mouvement d'accouplement, les faces radiales avant des ergots 70 entrent alors en contact avec les plans d'indexation 98 du manchon 86.

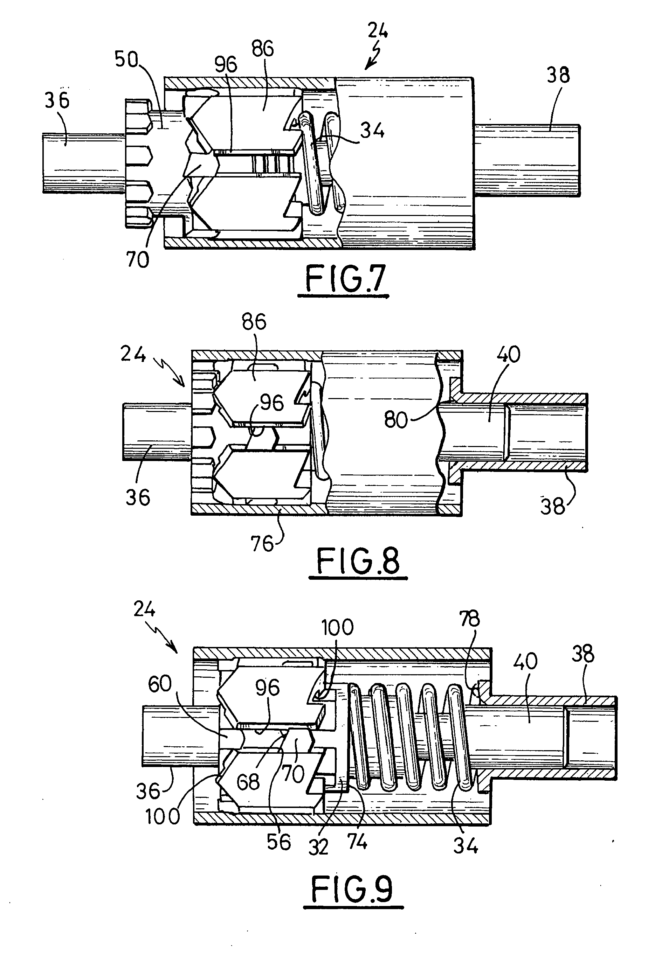

Comme représenté à la figure 7, en poursuivant le mouvement axial d'accouplement vers l'avant de l'embout mâle 26, les ergots 70 glissent contre les plans d'indexation 98 du manchon 86 de manière à provoquer automatiquement la rotation de la bague 32 vers une position angulaire d'engagement dans laquelle les ergots 70 sont alignés axialement avec les rainures d'insertion 96. Le corps 30 de l'embout mâle 26 est alors dans une position axiale dite d'emmanchement.

On remarquera que pour que le dispositif 24 selon l'invention fonctionne correctement, il est donc important que l'imbrication de la face dentelée avant 54 du collet 50 dans la face dentelée arrière 66 de la bague 32 n'empêche pas la bague 32 de tourner en coulissant par rapport au corps 30 lorsque le ressort 34 ne pousse pas axialement la bague 32 contre le collet 50 comme c'est le cas lorsque le corps 30 est en position d'emmanchement.

Comme on le verra par la suite, seules les pentes "descendantes" 56, 68 sont utilisées pour réaliser le verrouillage du dispositif 24, cependant elles sont aussi apte à permettre la rotation de la bague 32 dans le sens inverse du sens positif "R" par rapport au corps 30 lorsque les faces dentelées avant 54 et arrière 66 sont en contact l'une avec l'autre en provoquant un léger mouvement de coulissement axial de la bague 32 vers l'avant par rapport au corps 30'.

De même, les pentes "montantes" 55, 67 permettent à la bague 32 de tourner dans le sens positif par rapport au corps 30.

La forme en "V" de la face radial avant des ergots 70 permet avantageusement de faire tourner la bague 32 dans un sens ou dans l'autre lorsque les ergots 70 sont malencontreusement agencés en vis-à-vis des pointes formées par deux plans d'indexation 98 adjacents. Il n'existe ainsi pas de position angulaire de la bague 32 dans laquelle le mouvement axial d'accouplement est bloqué.

Comme représenté à la figure 8, en poursuivant le mouvement axial d'accouplement vers l'avant de l'embout mâle 26, les ergots 70 sont engagés en coulissement axial dans les rainures d'insertion 96 en bloquant ainsi la rotation de la bague 32 par rapport à l'embout femelle 28. Le collet 50 du corps 30 de l'embout mâle 26 commence alors à pénétrer dans le manchon 86.

Les doigts d'indexation 60 du collet 50 sont ici alignés axialement avec les rainures d'insertion 96 et avec les cannelures 100 du manchon.

Cependant, lorsque les doigts d'indexation 60 du collet 50 ne sont pas alignés axialement avec les rainures d'insertion 96 et avec les cannelures 100, les doigts d'indexations 60 entrent à leur tour en contact avec les plans d'indexation 98 du manchon 86. Les plans d'indexation 98 guident alors cinq des dix doigts d'indexation 60 vers les rainures d'insertion 96, les cinq autres doigts d'indexation 60 étant par conséquent guidés vers les cannelures 100.

Les doigts d'indexation 60 en coopération avec les plans d'indexation 98 permettent ainsi d'indexer la position angulaire du corps 30 de l'embout mâle 26 par rapport au manchon 86 de l'embout femelle 28.

Les faces radiales avant en forme de "V" des doigts d'indexation 60 ont la même fonction que les faces radiales avant en forme de "V" des ergots 70, c'est-à-dire éviter l'existence de positions angulaires de blocage en coulissement de l'embout mâle 26 par rapport à l'embout femelle 28.

Par ailleurs, le fait de disposer de dix doigts d'indexation 60 permet avantageusement d'indexer la position angulaire du corps 30 de l'embout mâle 26 en pivotant le corps 30 autour de l'axe "B" d'un angle très faible par rapport à l'embout femelle 28. Ainsi, dans le cas présent, le corps 30 doit pivoter d'un angle de moins de 36° lorsque les doigts d'indexation 60 ne sont pas alignés.

Comme illustré à la figure 8, à ce moment de l'accouplement, la portée avant 40 du corps 30 de l'embout mâle 26 est emmanchée dans le tronçon d'extrémité avant 38 de l'embout femelle 28 à travers l'orifice coaxial 80 du fond 78 du tronçon arrière 76 de l'embout femelle 28.

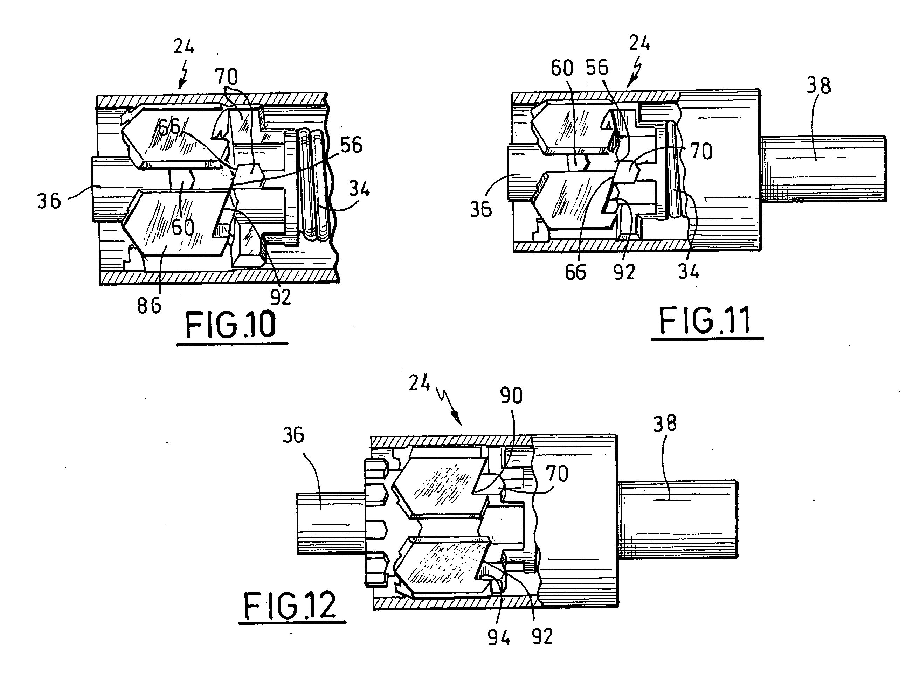

Puis, comme représenté à la figure 9, les ergots 70 étant toujours engagés dans la rainure d'insertion 96, les doigts d'indexation 60 sont à leur tour reçus en coulissement axial dans les rainures d'insertion 96 et dans les cannelures 100.

L'extrémité avant du ressort 34 entre alors en contact avec le fond 78 du tronçon arrière 76 de l'embout femelle 28. Le ressort 34 est ainsi comprimé entre la bague 32 et le fond 78 à mesure que l'embout mâle 26 est déplacé selon le mouvement axial d'accouplement. Le ressort 34 exerce ainsi une force axiale de rappel dirigée d'avant en arrière sur la bague 32 qui est poussée contre la face avant dentelée 54 du collet 50.

Comme représenté à la figure 9, la face arrière dentelée 66 de la bague 32 n'est pas totalement imbriquée dans la face avant dentelée 54 du collet 50. Plus particulièrement, seules les pentes "descendantes" 68 de la bague 32 sont en contact avec les pentes "descendantes" 56 du collet 50.

La force de rappel du ressort 34 incite les pentes "descendantes" 68 de la bague à glisser le long des pentes "descendantes" 56 du collet 50 de manière que la bague 32 tourne dans le sens positif "R" par rapport au corps 30 pour que les faces dentelées complémentaires 54, 66 soient imbriquées l'une dans l'autre.

Cependant, les ergots 70 qui sont engagés dans les rainures d'insertion 96, empêchent la bague 32 de tourner par rapport à l'embout femelle 28, et les doigts d'indexation 60 du collet 50 qui sont engagés dans les cannelures 100, empêchent le corps 30 de tourner par rapport à l'embout femelle 28. Le mouvement de rotation relatif entre la bague 32 et le corps 30 est donc bloqué.

Le mouvement axial d'accouplement est poursuivi jusqu'à ce que le corps 30 atteigne une position axiale avant transitoire qui est illustrée à la figure 10 et dans laquelle les pentes 56 de la face avant dentelée 54 du collet 50 sont agencées dans le prolongement vers l'avant des rampes de verrouillage 92 du manchon 86.

Dans sa position avant transitoire, le corps 30 est axialement en avant par rapport à sa position avant accouplée.

Dans cette position avant transitoire, les ergots 70 de la bague 32 sont sortis de la rainure d'insertion 96. La bague 32 est donc de nouveau libre de tourner par rapport au corps 30 et par rapport à l'embout femelle 28, tandis que le corps 30 est toujours solidaire en rotation de l'embout femelle 28.

Le ressort 34 qui a été comprimé lors du mouvement d'accouplement pousse alors la bague 32 vers l'arrière. Les pentes "descendantes" 66 de la bague 32 glissent alors contre les pentes "descendantes" 56 du collet 50 de manière que la bague 32 soit animée automatiquement et simultanément d'un mouvement de coulissement axial vers l'arrière par rapport au corps 30, et d'un mouvement rotatif dans le sens positif "R" vers une position angulaire intermédiaire de verrouillage dans laquelle la face arrière dentelée 66 de la bague 32 est complètement imbriquée dans la face avant dentelée 54 du collet 50.

Les ergots 70 sont alors engagés sur les rampes de verrouillage 92 du manchon 86 comme illustré à la figure 11.

Le mouvement axial d'accouplement cesse alors d'être appliqué au corps 30. La bague 32 folle en rotation est alors poussée par le ressort 34 contre les rampes de verrouillage 92, et la bague 32 n'est plus en butée contre le collet 50, mais contre le manchon 86.

Les ergots 70 glissent alors automatiquement sur les rampes de verrouillage 92 jusqu'au fond des crans 90 en provoquant le pivotement dans le sens positif "R" de la bague 32 jusqu'à sa position angulaire de verrouillage.

Simultanément, le corps 30 de l'embout mâle 26 est repoussé axialement vers l'arrière par le ressort 34 par l'intermédiaire de la bague 32.

Les ergots 70 sont avantageusement maintenus au fond des crans 90 associés par la force axiale du ressort 34. Ainsi, l'embout mâle 26 est verrouillé à l'embout femelle 28 en position accouplée quelle que soit l'orientation de l'axe "B" par rapport à la gravité.

La bague 32 est alors fixe par rapport à l'embout femelle 28, tandis que le corps 30 est libre de coulisser par rapport à la bague 32 dans les limites permises par la face avant 54 du collet 50 et par l'épaulement avant 48 du corps 30, ou de tourner par rapport à la bague 32.

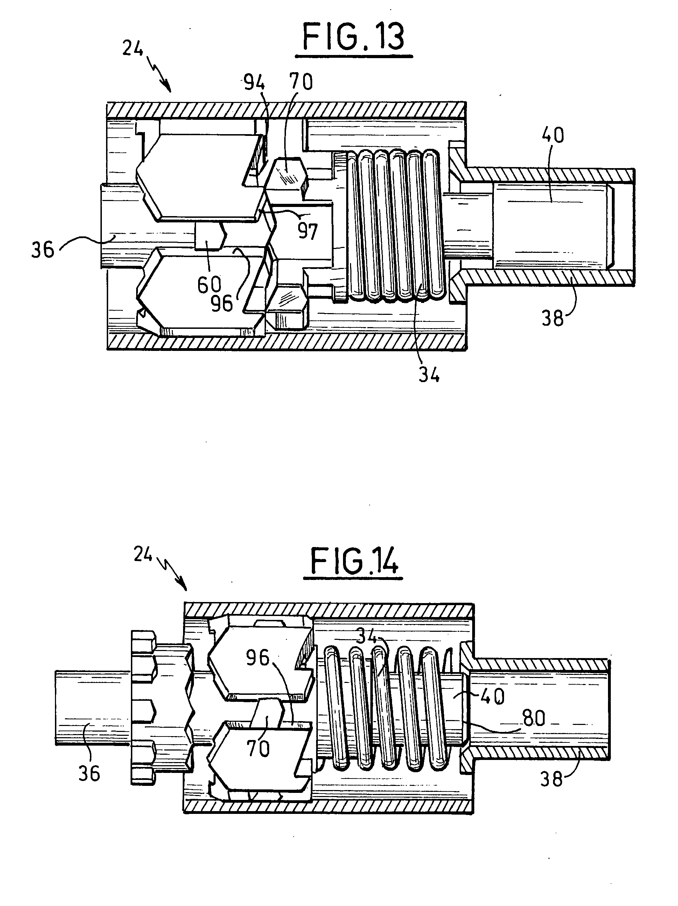

On décrit à présent le fonctionnement du dispositif 24 lors du désaccouplement des embouts mâle 26 et femelle 28 en se référant aux figures 13 et 14.

Pour déverrouiller l'embout mâle 26, il faut appliquer au corps 30 un mouvement axial de désaccouplement vers l'avant similaire au mouvement axial d'accouplement.

Les doigts d'indexation 60 du collet 50 sont alors de nouveau engagés dans les rainures d'insertion 96 et dans les cannelures 100 comme décrit pour l'accouplement.

Puis, les pentes "descendantes" 56 de la face avant dentelée 54 du collet 50 entrent en contact avec les pentes "descendantes" 68 de la face arrière dentelée 66 de la bague 32.

En poursuivant le mouvement axial de désaccouplement vers l'avant, la face avant dentelée 54 du collet 50 pousse la face arrière dentelée 66 de la bague 32. La face avant dentelée 54 du collet 50 n'est pas totalement imbriquée dans la face arrière dentelée 66 de la bague 32. Plus particulièrement, seules les pentes "descendantes" 68 de la bague 32 sont en contact avec les pentes "descendantes" 56 du collet 50.

La force de rappel du ressort 34 incite les pentes "descendantes" 68 de la bague à glisser le long des pentes "descendantes" 56 du collet 50 de manière que la bague 32 tourne dans le sens positif "R" par rapport au corps 30 pour que les faces dentelées complémentaires 54, 66 soient imbriquées l'une dans l'autre.

Cependant, les ergots 70 sont au contact de la face de blocage 94 associée du cran 90, bloquant ainsi la rotation de la bague 32 dans le sens positif "R" par rapport au corps 30 qui est lui-même solidaire en rotation de l'embout femelle 28 par l'intermédiaire des doigts d'indexation 60.

La bague 32 coulisse donc vers l'avant, poussée par le corps 30, jusqu'à ce que le corps 30 soit dans sa position extrême avant transitoire comme représentée à la figure 13. Dans cette position avant transitoire, les pentes "descendantes" 56 du collet 50 sont agencées dans le prolongement vers l'avant des rampes de libération 97 du manchon 86.

Les ergots 70 ne sont alors plus bloqués en rotation par les faces de blocage 94. La force de rappel du ressort 34 pousse donc la bague 32 contre le collet 50, et elle provoque ainsi la rotation automatique de la bague 32 dans le sens positif vers une position angulaire intermédiaire de déverrouillage dans laquelle la face arrière dentelée 66 de la bague 32 est complètement imbriquée dans la face avant dentelée 54 du collet 50, et dans laquelle les ergots 70 sont engagés sur les rampes de libération 97.

Le mouvement axial de désaccouplement cesse alors d'être appliqué au corps 30. La bague 32 folle en rotation est alors poussée par le ressort 34 contre les rampes de verrouillage 92, et la bague 32 n'est plus en butée contre le collet 50, mais contre le manchon 86.

Le ressort 34 continue d'exercer sa force de rappel qui pousse les ergots 70 vers l'arrière contre les rampes de libération 97. Les ergots 70 glissent le long des rampes de libération 97 vers l'arrière, provoquant ainsi la rotation de la bague 32 dans le sens positif "R" jusqu'à une position angulaire de libération qui est ici identique à la position angulaire d'engagement de la bague 32 dans laquelle les ergots sont alignés avec les rainures d'insertion 96 du manchon 86.

La rotation de la bague 32 entraîne le coulissement du corps 30 vers l'arrière par rapport à la bague 32.

Puis, comme représenté à la figure 14, le ressort pousse les ergots 70 vers l'arrière de manière qu'ils soient engagés dans les rainures d'insertion 96.

L'embout mâle 26 n'est alors plus verrouillé par rapport à l'embout femelle 28, et il est possible de désaccoupler le dispositif 24 en tirant simplement l'embout mâle 26 vers l'arrière.

Le ressort 34 donne avantageusement une impulsion suffisante pour projeter l'embout mâle 26 hors de l'embout femelle 28.

Ainsi, grâce au dispositif selon 24 l'invention, l'opérateur ne doit appliquer qu'un mouvement axial d'accouplement à l'embout mâle 26 pour que ce dernier soit raccordé et aussi verrouillé.

Le dispositif 24 permet aussi de déverrouiller l'embout mâle 26 en lui appliquant un mouvement axial de désaccouplement.

Selon une variante non représentée de l'invention, le ressort 34 fait partie de l'embout femelle 28. Il est agencé dans le tronçon d'extrémité arrière 76 de manière coaxiale. Son extrémité avant est par exemple fixée au fond 78 du tronçon arrière 78 en entourant l'orifice 80. Ainsi, lorsque l'embout mâle 26 est inséré dans l'embout femelle 28, la portée avant 40 de l'embout mâle 26 traverse coaxialement le ressort 34, et l'épaulement radial d'appui 74 de la bague 32 entre en contact avec l'extrémité arrière du ressort 34 qui est alors comprimé entre le fond 78 de l'embout femelle 28 et la bague 32 comme décrit précédemment.

On a décrit l'invention pour le raccordement de deux conduites de nettoyage, on comprendra que l'invention s'applique aussi à des conduites destinées à conduire tout autre type de fluide, voire à des câbles conducteurs d'électricité, de signaux optiques, etc.

## Revendications

1. Dispositif (24) pour l'accouplement démontable des extrémités libres (20, 22) de deux conduites, notamment de fluide, qui comporte deux embouts coaxiaux parmi lesquels :
- un premier embout mâle (26) d'accouplement qui est apte à être adapté à l'extrémité libre (20) de la première conduite ;
- et un deuxième embout femelle (28) qui est apte à être adapté à l'extrémité libre (22) de la deuxième conduite ;
du type dans lequel l'embout mâle (26) est mobile par rapport à l'embout femelle (28) entre une première position arrière démontée et une deuxième position avant accouplée dans laquelle l'embout mâle (26) est emmanché axialement vers l'avant à l'intérieur de l'embout femelle (28),
et du type qui comporte des moyens (70, 90) pour le verrouillage à baïonnette de l'embout mâle (26) en position accouplée avec l'embout femelle (28) qui comportent des premiers moyens (70) de blocage axial qui sont portés par l'embout mâle (26) qui sont destinés à coopérer avec des deuxièmes moyens (90) de blocage axial qui sont portés par l'embout femelle (28), le verrouillage a baïonnette étant obtenu par rotation des premiers moyens (70) dans un sens positif par rapport aux deuxièmes moyens (90) entre une position angulaire d'engagement et une position angulaire de verrouillage,
**caractérisé en ce qu'**il comporte des moyens de guidage en rotation (56, 68, 92) munis de moyens élastiques de rappel (34), qui provoquent la rotation automatique des premiers moyens de verrouillage (70) dans le sens positif (R) pour provoquer le verrouillage à baïonnette lorsque l'embout mâle (26) est emmanché axialement dans l'embout femelle (28) depuis sa position arrière démontée jusqu'à sa position avant accouplée.

2. Dispositif de raccordement (24) selon la revendication précédente, **caractérisé en ce que** les deuxièmes moyens de verrouillage comportent au moins un cran (90) qui est porté par l'embout femelle (28), et **en ce que** les premiers moyens de verrouillage comportent au moins un ergot (70) qui est monté mobile en rotation par rapport au corps (30) de l'embout mâle (26) autour de son axe entre la première position angulaire d'engagement dans laquelle l'ergot (70) est aligné axialement avec une rainure (96) d'insertion portée par l'embout femelle (28) et la deuxième position angulaire de verrouillage dans laquelle l'ergot (70) est logé dans le cran (90) de l'embout femelle (28) lorsque l'embout mâle (26) est en position avant accouplée.

3. Dispositif de raccordement (24) selon la revendication précédente, **caractérisé en ce qu'**il comporte une première rampe (56) de guidage en rotation de l'ergot (70) depuis sa position angulaire d'engagement jusqu'à une position angulaire intermédiaire de verrouillage, et **en ce qu'**il comporte une deuxième rampe de verrouillage (92) qui guide l'ergot (70) en rotation depuis sa position angulaire intermédiaire de verrouillage jusqu'à sa position angulaire de verrouillage.

4. Dispositif de raccordement (24) selon la revendication précédente, **caractérisé en ce que** la deuxième rampe de verrouillage (92) est portée par l'embout femelle (28) et comporte un plan radial orienté vers l'avant qui est incliné d'avant en arrière depuis une première extrémité avant qui est adjacente à une extrémité avant de la rainure d'insertion (96) jusqu'à une deuxième extrémité arrière qui est adjacente au cran (90), et **en ce que** les moyens élastiques de rappel (34) poussent l'ergot de verrouillage (70) axialement vers l'arrière contre la deuxième rampe de verrouillage (92) lorsque l'embout mâle (26) est dans sa position accouplée et lorsque l'ergot (70) est dans sa position angulaire intermédiaire, de manière à provoquer la rotation de l'ergot (70) jusqu'à sa position angulaire de verrouillage dans laquelle il est logé dans le cran (90).

5. Dispositif (24) selon la revendication précédente, **caractérisé en ce que** l'ergot (70) est monté coulissant axialement par rapport au corps (30) de l'embout mâle (26), et **en ce que** la première rampe de guidage (56) est portée par le corps (30) de l'embout mâle (26) de manière qu'elle soit agencée dans le prolongement vers l'avant de la deuxième rampe de verrouillage (92) lorsque l'embout mâle (26) est dans une position avant transitoire, et de manière que l'ergot (70) soit poussé par les moyens élastiques de rappel (34) vers l'arrière contre la première rampe de guidage (56) pour provoquer la rotation de l'ergot (70) jusqu'à sa position angulaire intermédiaire.

6. Dispositif de raccordement selon l'une quelconque des revendications 2 à 5, **caractérisé en ce qu'**il comporte des moyens de déverrouillage (56, 68, 97, 34) qui guident automatiquement l'ergot de verrouillage (70) en rotation dans le sens positif hors du cran de verrouillage (90) depuis sa position angulaire de verrouillage jusqu'à une position angulaire de libération dans laquelle l'ergot (70) est aligné avec une rainure axiale (96) de libération qui est portée par l'embout femelle (28), lorsque l'embout mâle (26) est poussé axialement vers l'avant depuis sa position avant accouplée jusqu'à sa position extrême avant transitoire dans laquelle l'ergot (70) est à l'avant du cran (90).

7. Dispositif de raccordement (24) selon la revendication précédente, **caractérisé en ce que** les moyens de déverrouillage comportent :
- une deuxième rampe de guidage (56) qui guide l'ergot en rotation entre sa position angulaire de verrouillage et une position angulaire intermédiaire de déverrouillage lorsque le corps (30) de l'embout mâle (26) est poussé axialement vers l'avant depuis sa position accouplée jusqu'à sa position avant transitoire ;
- une rampe de libération (97) qui est portée par l'embout femelle (28) et qui comporte un plan radial orienté vers l'avant qui est incliné d'avant vers l'arrière depuis une première extrémité avant qui est adjacente au cran (90) jusqu'à une deuxième extrémité arrière qui est adjacente à la rainure de libération (96) de manière à guider l'ergot (70) en rotation depuis sa position angulaire intermédiaire de déverrouillage jusqu'à sa position angulaire de libération, et **en ce que** les moyens élastiques de rappel (34) poussent l'ergot de verrouillage (70) axialement vers l'arrière contre la rampe de guidage (56) de manière à le faire glisser jusqu'à sa position angulaire de libération.

8. Dispositif (24) selon la revendication précédente, **caractérisé en ce que** l'ergot (70) est monté coulissant axialement par rapport à l'embout mâle (26), et **en ce que** la deuxième rampe de guidage (56) qui est portée par l'embout mâle (26), est agencée dans le prolongement vers l'avant de la rampe de libération lorsque l'embout mâle (26) est dans sa position avant transitoire.

9. Dispositif selon l'une quelconque des revendications 3 ou 8, **caractérisé en ce qu'**il comporte des moyens d'indexation angulaire (60, 98) du corps (30) de l'embout mâle (26) par rapport l'embout femelle (28).

10. Dispositif selon la revendication précédente, **caractérisé en ce que** l'un des deux embouts (26) comporte au moins un doigt radial d'indexation (60) qui est destiné à coopérer avec une rainure axiale d'indexation (96, 100) de l'autre embout (28).

11. Dispositif selon l'une quelconque des revendications 2 à 10, **caractérisé en ce que**, dans la position accouplée de l'embout mâle (26), les moyens élastiques de rappel (34) exercent une force axiale sur l'ergot (70) afin de le maintenir dans le cran de verrouillage (90).
